# EUROPÄISCHE PATENTSCHRIFT

(11) **EP 0 857 339 B1**
(45) Veröffentlichungstag und Bekanntmachung des Hinweises auf die Patenterteilung: **06.05.1999**
(21) Anmeldenummer: 96934796.2
(22) Anmeldetag: 23.10.1996
(51) Int. Cl.: G07F 7/12, G06K 19/14, G06K 19/073

(54) **VERFAHREN UND SYSTEM ZUR ECHTHEITSPRÜFUNG EINES DATENTRÄGERS, SOWIE DATENTRÄGER ZUR VERWENDUNG IM SYSTEM**
METHOD AND SYSTEM OF CHECKING THE AUTHENTICITY OF A DATA CARRIER AND DATA CARRIER FOR USE IN THE SYSTEM
PROCEDE ET SYSTEME PERMETTANT DE VERIFIER L'AUTHENTICITE D'UN SUPPORT DE DONNEES ET SUPPORT DE DONNEES UTILISE DANS LE SYSTEME

(30) Priorität: 23.10.1995 DE 19539355
(43) Veröffentlichungstag der Anmeldung: 12.08.1998
(73) Patentinhaber: Giesecke & Devrient GmbH, 81677 München (DE)
(72) Erfinder: LAMLA, Michael, D-80935 München (DE)
(74) Vertreter: Klunker . Schmitt-Nilson . Hirsch
(86) Internationale Anmeldenummer: EP9604603
(87) Internationale Veröffentlichungsnummer: WO9715905

(56) Entgegenhaltungen:
- EP-A- 0 112 461
- EP-A- 0 463 930
- WO-A-90/16043
- FR-A- 2 646 260
- GB-A- 2 084 929
- US-A- 4 783 823

## Beschreibung

Die Erfindung betrifft ein Verfahren und System zur Prüfung der Echtheit eines Datenträgers gemäß dem Oberbegriff des Anspruchs 1 bzw. 10, sowie einen Datenträger gemäß dem Oberbegriff des Anspruchs 14.

Ein Verfahren dieser Art ist z. B. aus der EP 0 313 967 A1 bekannt. Bei diesem Verfahren wird bei der Chipherstellung gezielt Einfluß auf die physikalische Struktur des integrierten Schaltkreises genommen und somit der integrierte Schaltkreis mit bestimmten Merkmalen versehen, die als den Schaltkreis kennzeichnende physikalische Eigenschaften auswertbar sind. In diesem Zusammenhang wird in dieser Druckschrift vorgeschlagen, den integrierten Schaltkreis mit einer metallischen Beschichtung mit einer wirren Flächenstruktur zu versehen, die über eine Widerstandsmessung an mehreren Orten abtastbar ist, wobei das dabei erhaltene Widerstandsprofil in Form von Kenndaten zur Echtheitsbestimmung des Datenträgers abgespeichert wird. Die Erfassung einer solchen wirren Flächenstruktur ist jedoch meßtechnisch aufwendig und schwierig.

Aus der WO 94/15318 ist ebenfalls ein Verfahren gemäß dem Oberbegriff des Anspruchs 1 bekannt. Bei diesem bekannten Verfahren wird zur Prüfung der Echtheit eines Datenträgers die physikalische Eigenschaft aus einem irreversibel einstellbaren elektrischen Zustand einer auf dem integrierten Schaltkreis separat vorhandenen Schaltung bestimmt. Die elektrische Eigenschaft der Schaltung wird zur Erstellung eines Kenndatenwertes für den Datenträger verwendet und zur Echtheitsbestimmung ausgewertet. Obwohl der für den integrierten Schaltkreis kennzeichnende irreversibel eingestellte elektrische Zustand meßtechnisch einfach erfaßbar ist, so erfordert dieses Prüfverfahren jedoch einen zusätzlichen Schaltungsaufwand, um die Echtheit des Datenträgers prüfen zu können.

US-A-4.783.823 offenbart eine Chipkarte, bei der eine zur Echtheitsprüfung der Karte geeignete, optisch auswertbare Information in Form von phosphoreszierenden Zeichen getrennt vom IC auf der Oberfläche der Karte angeordnet ist. Für die Echtheitsprüfung werden die als phosphoreszierende Flächen hinterlegten Zeichen ausgelesen und mit gleichfalls auf der Karte abgelegten Referenzzeichen verglichen. Dieses Konzept sichert die Zugehörigkeit von Datenträger und Chip. Der Chip selbst ist dabei allerdings nur auf Datenebene gesichert und grundsätzlich gegen einen baugleichen Chip austauschbar.

EP-A-0.112.461 sieht zur Sicherheit der Echtheit der IC-Karte die Ausbildung einer mit Fertigungstoleranz behafteten Antenne vor, von der eine elektromagnetische Eigenschaft bestimmt und auf der IC-Karte hinterlegt wird.

Die Aufgabe der Erfindung besteht nun darin, ein Verfahren zur Echtheitsprüfung eines Datenträgers vorzuschlagen, das eine zuverlässige Echtheitsprüfung mit geringem technischen Aufwand ermöglicht, sowie ein entsprechendes System und einen Datenträger zu schaffen.

Die Aufgabe wird erfindungsgemäß durch die in den Ansprüchen 1, 10 und 14 angegebenen Merkmale gelöst.

Der Grundgedanke der Erfindung besteht darin, in wenigstens einem Bereich des integrierten Schaltkreises des Datenträgers ein Material vorzusehen, das energetisch anregbar ist, wobei wenigstens eine charakteristische Eigenschaft der von dem Material emittierten elektromagnetischen Strahlung gemessen und zur Echtheitsbestimmung des Datenträgers ausgewertet wird. Da beim erfindungsgemäßen Verfahren die Messung nichtberührend erfolgt, kann die Echtheitsprüfung unabhängig von dem in einem Übertragungsprotokoll definierten Datenaustausch erfolgen.

Vorzugsweise erfolgt die Anregung durch eine elektromagnetische Strahlung, die dem Material extern zugeführt wird, wobei die vom Material emittierte Strahlung optisch gemessen wird. Die Anregung des Materials kann aber auch durch ein elektrisches Feld erfolgen, welches von einer auf dem integrierten Schaltkreis des Datenträgers vorgesehenen Einrichtung erzeugt wird. Gemäß einer Weiterbildung kann die gemessene elektromagnetische Strahlung in einen für den integrierten Schaltkreis kennzeichnenden binären Kenndatenwert umgewandelt werden, der in einem Speicher des integrierten Schaltkreises gespeichert werden kann. Korreliert der von der gemessenen elektromagnetischen Strahlung abgeleitete binäre Kenndatenwert mit dem aus dem Speicher des Datenträgers gelesenen Kenndatenwert, so wird der integrierte Schaltkreis und somit der Datenträger als echt erkannt. Der festgespeicherte Kenndatenwert kann zusätzlich auch mit einer von einem externen Gerät an den Datenträger übertragenen variablen Information, z. B. einer vom Gerät erzeugten Zufallszahl, in der integrierten Schaltung des Datenträgers zu einer Ausgangsinformation verknüpft und an das Gerät übertragen werden, die dann vom Gerät zur Echtheitsbestimmung des Datenträgers ausgewertet wird.

Vorzugsweise wird ein Halbleitermaterial, wie z. B. poröses Silizium verwendet, das monolithisch in den integrierten Schaltkreis integrierbar ist. Bezüglich der physikalischen Eigenschaften von porösem Silizium wird auf den Inhalt der Literaturstelle "Porous Silicon; A silicon structure with new optical properties", F. Buda und J. Kohanoff, erschienen in Prog. Quant Electr. 1994, Vol. 18, Seiten 201 - 227, verwiesen. In dieser Literaturstelle sind die der Lumineszenz von porösem Silizium zugrundeliegenden Gesetzmäßigkeiten eingehend beschrieben. Selbstverständlich können auch andere Halbleitermaterialien verwendet werden (z. B. dotiertes Mangansulfid oder Cadmiumsulfid), die die Eigenschaft besitzen, bei entsprechender Anregung eine charakteristische elektromagnetische Strahlung zu emittieren, die meßtechnisch erfaßbar ist.

Es können aber auch keine Halbleitermaterialien, wie z. B. das Polymer Poly-Phenylen-Vinylen (PPV) verwendet werden, das bei Anregung durch ein elektrisches Feld Licht emittiert. Dieses Polymer kann z. B. in Form eines Photolacks während der Herstellung des integrierten Schaltkreises auf einer Siliziumschicht aufgetragen werden. Die Siliziumschicht bildet hierbei eine der beiden Elektroden, zwischen denen das Polymer angeordnet ist. Die zweite Elektrode kann z. B. eine Metallelektrode sein. Die Siliziumschicht mit dem Polymer und auch die Metallelektrode können hierbei von einer Passivierungsschicht abgedeckt werden. Darüber hinaus können auch andere geeignete Materialien verwendet werden, die die Eigenschaft besitzen, bei entsprechender Anregung eine elektromagnetische Strahlung zu emittieren, die für das Material charakteristisch ist. Diese Materialien können z. B. in Lacken oder Folien dispergiert auf einer Schicht des integrierten Schaltkreises aufgebracht werden.

Durch die Vorsehung eines Materials auf dem integrierten Schaltkreis, das bei entsprechender Anregung eine charakteristische elektromagnetische Strahlung emittiert, wird eine mögliche Simulation oder Manipulation von Datenträgern mit einem solchen Echtheitsmerkmal um ein Vielfaches erschwert, da die Herstellung eines integrierten Schaltkreises mit einem solchen Material, ein hohes Maß an Wissen und technicher Fertigkeit auf dem Bereich der Halbleitertechnologie erfordert.

Weitere Vorteile und Weiterbildungen sind der Beschreibung der Erfindung anhand der Figuren und den Ansprüchen entnehmbar.

Die Figuren zeigen:
- Fig. 1: einen Datenträger mit integriertem Schaltkreis in der Aufsicht,
- Fig. 2: den Datenträger in einer Schnittdarstellung,
- Fig. 3a und 3b: jeweils ein Ausführungsbeispiel des Bereichs mit dem lumineszierenden Halbleitermaterial,
- Fig. 4 und 5: jeweils einen Datenträger in Verbindung mit einem Gerät zur Echtheitsprüfung.

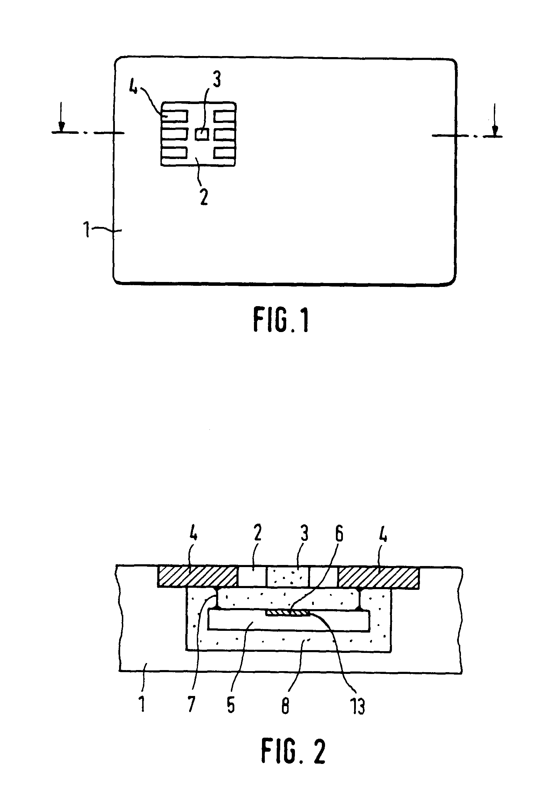

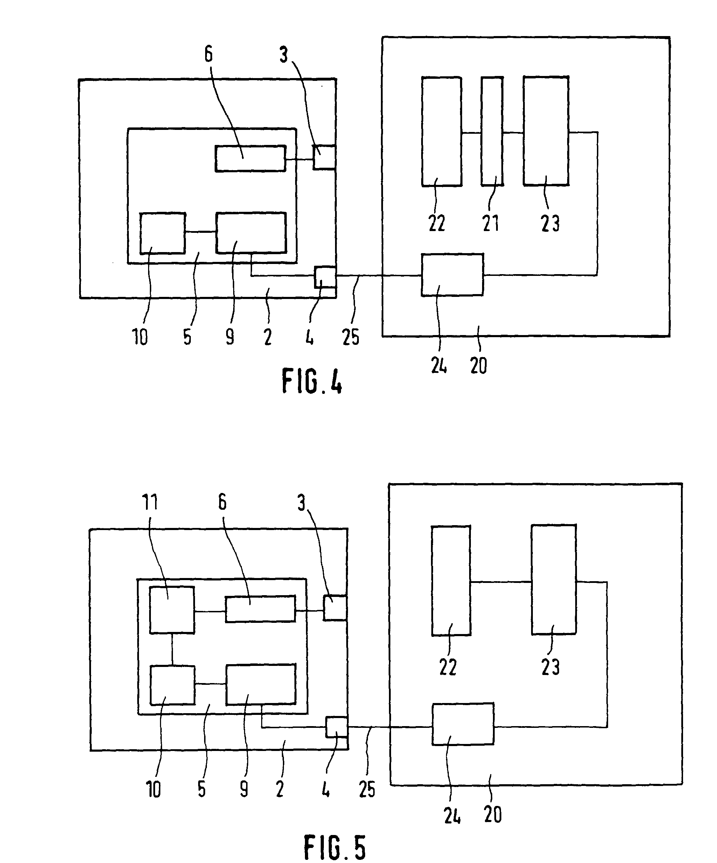

Fig. 1 zeigt in der Aufsicht einen Datenträger 1, wie er z. B. im bargeldlosen Zahlungsverkehr als Buchungskarte oder als Speicherkarte, wie z. B. als Telefonkarte, Anwendung findet. Der Datenträger 1 weist ein elektronisches Modul 2 auf, das über die Kommunikationselemente, z. B. in Form von Kontaktflächen 4, mit einem nicht dargestellten externen Peripheriegerät elektrisch verbunden werden kann. Selbstverständlich können die Kommuni kationselemente 4 auch, wie bereits bekannt, in Form einer Spule oder elektrooptischer Bauelemente ausgeführt sein, wobei dann der Datenaustausch zwischen dem Datenträger und dem Gerät nicht berührend erfolgen kann. Vorzugsweise ist im zentralen Bereich des Moduls 2 ein Fenster 3 vorgesehen, das sich oberhalb des hier der Übersichtlichkeit wegen nicht dargestellten integrierten Schaltkreises befindet.

Fig. 2 zeigt einen vergrößerten Ausschnitt einer Schnittdarstellung des Datenträgers gemäß Fig. 1. Wie ersichtlich, umfaßt das elektronische Modul 2 den integrierten Schaltkreis 5, der über die elektrischen Leiter 7 mit den Kommunikationselementen 4 elektrisch leitend verbunden ist. Auf der den Kommunikationselementen zugewandten Seite des integrierten Schaltkreises 5 ist wenigstens ein Bereich 13 vorgesehen, der ein Material 6, z. B. poröses Silizium, aufweist, welches von einer hier nicht dargestellten Passivierungsschicht des integrierten Schaltkreises abgedeckt wird. Das Material 6 befindet sich unterhalb des Fensters 3, das mit einer transparenten Gußmasse 8 gefüllt sein kann. Wie hier dargestellt, können auch die Verbindungsleiter 7 sowie auch der integrierte Schaltkreis 5 von der Gußmasse 8 umhüllt sein.

Diese Umhüllung gewährleistet einen guten Schutz des integrierten Schaltkreises samt der elektrischen Verbindungen bei Gebrauch des Datenträgers.

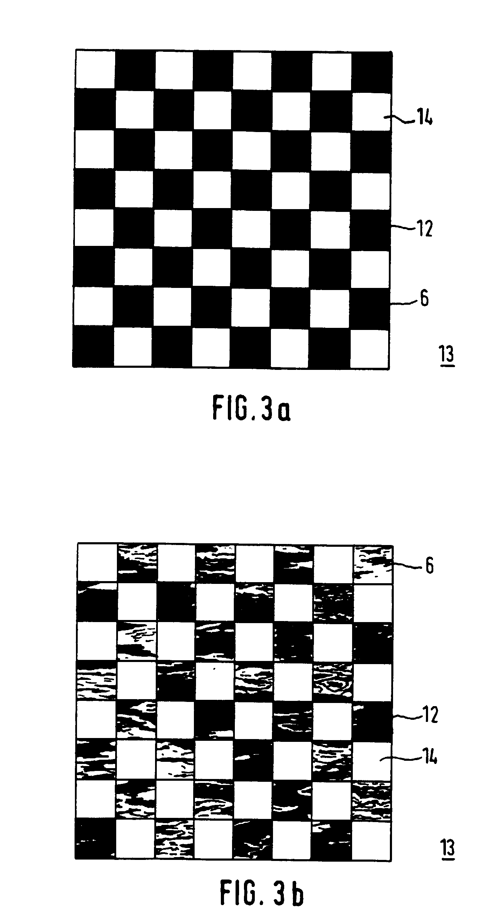

Die Fig. 3a und 3b zeigen jeweils vergrößert den Bereich 13 mit dem Material 6. Der Bereich 13 umfaßt die Zonen 14 mit dem nicht lumineszierenden Silizium und die Zonen 12 mit dem porösen Silizium 6, welches bei entsprechender Anregung luminesziert. Die Zonen 12 mit dem porösen Silizium 6 können beispielsweise durch externe Bestrahlung mit einer elektromagnetischen Strahlung, wie dies z. B. in Fig. 4 dargestellt ist oder aber auch mittels einer auf dem integrierten Schaltkreis vorgesehenen Einrichtung elektrisch angeregt werden, wie dies in Fig. 5 gezeigt ist. Jeder Zone 12 des Bereichs 13 kann hierbei ein Elektrodenpaar zugeordnet werden, das zeilen- und spaltenweise selektiv angesteuert werden kann, um die jeweilige Zone elektrisch zur Lumineszenz anzuregen. Die in Fig. 3a dargestellten Zonen 12 weisen eine regelmäßige Struktur, d. h. ein weitestgehend gleichen Anteil an porösem Silizium 6 auf. Die in Fig. 3b gezeigten Zonen 12 besitzen eine unregelmäßige Struktur, d. h. die Zonen weisen einen unterschiedlichen Anteil an porösem Silizium auf. Der Anteil und die Verteilung des porösen Siliziums innerhalb der Zonen kann hierbei zufällig sein. Die Struktur der Zonen 12 ist durch den Herstellungsprozeß bestimmt, bei dem das Silizium z. B. in einer wässrigen Flußsäurelösung elektrochemisch geätzt wird. Wird dabei auf Äthanol verzichtet, so entstehen die in Fig. 3b gezeigten zufälligen, unregelmäßigen Strukturen. Diese können z. B. zwei Mikrometer breit sein und eine Länge von 2 bis 10 Mikrometer aufweisen. Die gewünschte Größe und 5 räumliche Anordnung der Zonen 12 wird z. B. durch Verwendung einer entsprechenden Maske beim Herstellungsprozeß realisiert. Dies ist jedoch bekannt und nicht Gegenstand der Erfindung und wird daher hier nicht näher beschrieben.

Für die Erfindung ist in diesem Zusammenhang nur interessant, daß die Größe und Anordnung der Zonen 12 innerhalb des Bereichs 13 auf einen Fotodetektor optisch abbildbar und somit auflösbar ist. Zur Echtheitsbestimmung wird die innerhalb des Bereichs 13 von jeder Zone 12 emittierte Strahlung erfaßt und in Abhängigkeit von der gemessenen Strahlung kann jeder Zone ein binärer Wert zugeordnet werden. Die binäre Umwandlung kann z. B. durch einen Schwellenwertvergleich der für die jeweilige Zone erfaßten Strahlung mit einer Referenzgröße erfolgen. Bei dem in Fig. 3a gezeigten Ausführungsbeispiel ergeben die Zonen 12 aufgrund der regelmäßigen Struktur ein Klassenmerkmal für die integrierten Schaltkreise, welche die gleiche räumliche Anordnung der Zonen 12 aufweisen. Bei dem in Fig. 3b gezeigten Ausführungsbeispiel wird jedoch aufgrund der zufälligen Struktur der Zonen 12 ein für jeden integrierten Schaltkreis individuelles Echtheitsmerkmal erhalten.

Fig. 4 zeigt in einem vereinfachten Blockschaltbild ein Gerät 20 zur Echtheitsprüfung eines Datenträgers mit dem erfindungsgemäßen elektronischen Modul 2. Der Übersichtlichkeit halber ist hier nur das Modul dargestellt. Das elektronische Modul 2 umfaßt im wesentlichen den integrierten Schaltkreis 5 mit wenigstens einem Bereich 13, der das Material 6, z. B. poröses Silizium aufweist. In diesem Ausführungsbeispiel ist das Material 6 von den Speicher- und Logikelementen 9 und 10 entkoppelt. Das elektronische Modul 2 umfaßt des weiteren die Kommunikationselemente 4, über die der Datenaustausch zwischen dem integrierten Schaltkreis 5 und dem Gerät 20 erfolgt. In diesem Ausführungsbeispiel erfolgt der Datenaustausch über die Schnittstelle 25 berührend, jedoch ist es auch möglich, diesen berührungslos, z. B. induktiv oder optisch durchzuführen.
Das Gerät 20 umfaßt eine Schreib-/Leseeinrichtung 24, die über die Kommunikationselemente 4 zumindest auf Teilbereiche des Speichers 9 des integrierten Schaltkreises zum Lesen und/oder Schreiben von Daten Zugriff hat. Der Zugriff wird hierbei von der Logikeinrichtung 10 des integrierten Schaltkreises entsprechend gesteuert. Zusätzlich zu diesen an sich bekannten Einrichtungen weist das Gerät eine Einrichtung 21 auf, mittels der der Bereich 13 mit dem Material 6 durch Bestrahlung mit einer elektromagnetischen Strahlung zur Lumineszenz angeregt werden kann. Die Einrichtung 21 kann z. B. ein Laser sein, der in einem Wellenlängenbereich von 400 bis 650 nm, vorzugsweise mit ca. 488 nm, das poröse Silizium 6 zur Lumineszenz anregt. Die dadurch emittierte elektromagnetische Strahlung wird durch das transparente Fenster 3 hindurch von einer Einrichtung 22 erfaßt. Die Meßeinrichtung 22 kann beispielsweise ein Fotodetektor sein, der aus einer Zeile bzw. Matrix von Fotodioden besteht. Die Abmessungen des Detektors 22 sind hierbei so gewählt, daß sie auf die Abmessungen des Bereichs 13 mit dem Material 6 und des Fensters 3 abgestimmt sind.

Das in Fig. 5 dargestellte elektronische Modul 2 umfaßt zusätzlich eine Einrichtung 11 zur elektrischen Anregung des Materials 6. Die Einrichtung 11 erzeugt das für die Elektrolumineszenz benötigte elektrische Feld mit einer Feldstärke von z. B. 10⁵ Volt pro cm. Das Material 6 kann z. B. poröses Silizium oder aber auch ein lichtemittierendes Polymer, wie z. B. PPV sein. Die Ansteuerung der Einrichtung 11 erfolgt durch die Logikelemente 10, welche zur Steuereinrichtung (CPU) des integrierten Schaltkreises gehören. Die Einrichtung 11 kann z. B. in Abhängigkeit eines von dem Gerät 20 empfangenen Signals von der Steuereinrichtung aktiviert werden.

Die Echtheitsbestimmung des Datenträgers kann bei den in Fig. 4 und 5 gezeigten Ausführungsbeispielen beispielsweise anhand des Spektrums der vom Material 6 emittierten elektromagnetischen Strahlung bei einer bestimmten Wellenlänge, z. B. bei ca. 600 nm, erfolgen. Das Emissionsspektrum ist hierbei durch das Anregungsspektrum bestimmt. Zur Echtheitsbestimmung des Datenträgers kann aber auch die Abhängigkeit zwischen Anregungs- und Emissionsspektrum ausgewertet werden. Desweiteren können auch die bei unterschiedlichen Anregungsspektren erhaltenen Emissionsspektren, z. B. in Form einer Differenzbildung miteinander verknüpft werden, wobei die Differenzen zur Echtheitsbestimmung ausgewertet werden. Zur Echtheitsprüfung kann jedoch auch die räumliche Anordnung der lichtemittierenden Zonen 12 innerhalb eines bestimmten Bereichs 13 des integrierten Schaltkreises 5 ausgewertet werden, wobei die Zonen 12 selbstverständlich auf einen Fotodetektor 22 entsprechend optisch abzubilden sind. Das gemessene Emissionsspektrum oder auch das Verhältnis von Anregungs- und Emissionsspektrum können hierbei z. B. ein Klassenmerkmal oder ein individuelles Merkmal für den Schaltkreis darstellen.

Zur Echtheitsprüfung kann jedoch auch ein binärer Kenndatenwert verwendet werden. Der binäre Kenndatenwert kann sich hierbei aus der spektralen Verteilung der vom Material 6 emittierten elektromagnetischen Strahlung einerseits, als auch aus der räumlichen Anordnung der lichtemittierenden Zonen 12 ergeben. Bei letzterem kann jedem Bit des binären Kenndatenwertes hierbei eine bestimmte lichtemittierende Zone zugeordnet werden. Die Einrichtung 23 wandelt hierbei die gemessene, von den Zonen 12 emittierte Strahlung in einen binären Kenndatenwert um, der z. B. mit weiteren im Speicher des Datenträgers enthaltenen Daten verknüpft werden kann. Der Kenndatenwert kann z. B., nachdem der integrierte Schaltkreis getestet und für gut befunden wurde, in einen gegen Veränderung geschützten Bereich des Speichers 9 geschrieben werden. Zur Prüfung der Echtheit des Datenträgers wird selbstverständlich die gleiche Anregung wie bei der Erstellung des abgespeicherten Kenndatenwertes gewählt, wobei die durch die Anregung bewirkte, von dem Material 6 emittierte elektromagnetische Strahlung von der Einrichtung 22 gemessen und in der Einrichtung 23 in den binären Kenndatenwert umgewandelt wird, der mit dem aus dem Speicher 9 von der Lese-/Schreibeinrichtung 24, gelesenen Kenndatenwert vom Gerät 20 verglichen wird. Bei positivem Verleichsergebnis wird der Datenträger als echt erkannt.

## Patentansprüche

1. Verfahren zur Echtheitsprüfung eines Datenträgers, mit wenigstens einem integrierten Schaltkreis mit Speicher- und Logikelementen sowie Elementen zur Kommunikation mit einem externen Gerät, welches eine durch den integrierten Schaltkreis bestimmte und den Schaltkreis kennzeichnende physikalische Eigenschaft auswertet, **gekennzeichnet** durch folgende Schritte:
- Versehen des integrierten Schaltkreises (5) mit wenigstens einem Bereich (13) mit einem lumineszierenden Material (6),
- Anregen des lumineszierenden Materials (6) zur Lumineszenz,
- Erfassen der bei der Lumineszenz abgegebenen elektromagnetischen Strahlung,
- Ableiten einer Echtheitsaussage über den Datenträger (1) aufgrund der erfaßten elektromagnetischen Strahlung.

2. Verfahren nach Anspruch 1, dadurch **gekennzeichnet,** daß die Anregung des Materials durch eine von außerhalb des Datenträgers erzeugte und dem Material zugeführte elektromagnetische Strahlung erfolgt oder durch ein vom integrierten Schaltkreis erzeugtes elektrisches Feld erfolgt.

3. Verfahren nach Anspruch 1, dadurch **gekennzeichnet,** daß die Lumineszenz des Materials zur Echtheitsbestimmung ausgewertet wird.

4. Verfahren nach Anspruch 3, dadurch **gekennzeichnet,** daß das Emissionsspektrum, insbesondere bei einer Wellenlänge von ca. 600 nm zur Echtheitsbestimmung des Datenträgers ausgewertet wird.

5. Verfahren nach Anspruch 4, dadurch **gekennzeichnet,** daß das Verhältnis aus Emissionsspektrum und Anregungsspektrum zur Echtheitsbestimmung des Datenträgers ausgewertet wird.

6. Verfahren nach Anspruch 4, dadurch **gekennzeichnet,** daß die Differenz der bei unterschiedlicher Anregung erhaltenen Emissionsspektren zur Echtheitsbestimmung ausgewertet wird.

7. Verfahren nach Anspruch 1, dadurch **gekennzeichnet,** daß die vom Material emittierte elektromagnetische Strahlung in einen binären Kenndatenwert umgewandelt wird, der im Speicher des integrierten Schaltkreises gespeichert wird.

8. Verfahren nach Anspruch 7, dadurch **gekennzeichnet,** daß der binäre Kenndatenwert aus der spektralen Verteilung der emittierten elektromagnetischen Strahlung und/oder der räumlichen Anordnung der lichtemittierenden Zonen abgeleitet wird.

9. Verfahren nach Anspruch 8, dadurch **gekennzeichnet,** daß der von der erfaßten elektromagnetischen Strahlung abgeleitete binäre Kenndatenwert mit dem aus dem Speicher des integrierten Schaltkreises gelesenen Kenndatenwert verglichen wird.

10. System zur Prüfung der Echtheit eines Datenträgers, umfassend
- einen Datenträger (1) mit wenigstens einem integrierten Schaltkreis (5), der Speicher- (9), Logik-, (10) und Kommunikationselemente (4) aufweist,
- eine Einrichtung (24) zur Echtheitsprüfung, die über die Kommunikationselemente (4) zumindest auf Teilbereiche der Speichereinrichtung (9) zum Lesen und/oder Schreiben Zugriff hat,
- eine Einrichtung (22) zur Messung einer physikalischen Eigenschaft des integrierten Schaltkreises (5),
dadurch **gekennzeichnet**, daß
- der integrierte Schaltkreis (5) wenigstens einen Bereich (13) mit einem Material (6) aufweist, das lumineszenzanregbar ist, wobei der Bereich (13) so angeordnet ist, daß von dem Material (6) abgegebene elektromagnetische Strahlung an die Meßeinrichtung (22) gelangen kann,
- eine Einrichtung (11, 21) zur Lumineszenzanregung des Materials (6)
- und eine Einrichtung (22) zur Erfassung der von dem Material (6) nach einer Lumineszenzanregung emittierten elektromagnetischen Strahlung sowie zur Bestimmung einer charakteristischen Eigenschaft davon vorgesehen ist.

11. System nach Anspruch 10, dadurch **gekennzeichnet,** daß die Einrichtungen (21, 22 und 24) Bestandteil eines Gerätes (20) sind.

12. System nach Anspruch 11, dadurch **gekennzeichnet,** daß die Einrichtung (21) zur Anregung ein Laser ist und die Einrichtung (22) ein Fotodetektor ist, der eine Zeile bzw. eine Matrix von Fotodioden aufweist.

13. System nach Anspruch 10, dadurch **gekennzeichnet,** daß die Einrichtung (11) zur Anregung des Materials (6) Bestandteil der integrierten Schaltung (5) ist.

14. Datenträger (1), zur Verwendung in einem System nach Anspruch (10), der wenigstens einen integrierten Schaltkreis (5) mit Speicher- (9) und Logikelementen (10) sowie Elementen (4) zur Kommunikation mit einem externen Gerät (20) aufweist,
dadurch **gekennzeichnet**, daß
der integrierte Schaltkreis (5) mit wenigstens einem aus einem lumineszenzanregbaren Material (6) gebildeten Bereich (13) versehen ist, welcher so angeordnet ist, daß von dem Material (6) bei einer Lumineszenz abgegebene elektromagnetische Strahlung mit einer Meßeinrichtung (22) erfaßbar ist.

15. Datenträger nach Anspruch 14, dadurch **gekennzeichnet,** daß im Bereich (13) mit dem Material (6) innerhalb des Moduls (2) ein Fenster (3) vorgesehen ist.

16. Datenträger nach Anspruch 15, dadurch **gekennzeichnet,** daß das Material (6), der integrierte Schaltkreis (5) von einer transparenten Vergußmasse (8) umgeben sind, die auch das Fenster (3) ausfüllt.

17. Datenträger nach Anspruch 14, dadurch **gekennzeichnet,** daß der Bereich (13) lichtemittierende Zone (12) und keine lichtemittierenden Zonen (14) umfaßt, deren Anordnung für den Datenträger kennzeichnend ist.

18. Datenträger nach Anspruch 17, dadurch **gekennzeichnet,** daß die Anordnung der Zonen (12) und (14) innerhalb des Bereichs (13) ein Klassenmerkmal oder ein individuelles Merkmal für den integrierten Schaltkreis (5) des Datenträgers darstellt.

19. Datenträger nach Anspruch 14, dadurch **gekennzeichnet,** daß das Material (6) lumineszierende Eigenschaften aufweist.

20. Datenträger nach Anspruch 19, dadurch **gekennzeichnet,** daß das Material (6) ein lichtemittierender Halbleiter, insbesondere poröses Silizium oder ein lichtemittierendes Polymer ist.

## Claims

1. A method for testing the authenticity of a data carrier with at least one integrated circuit with memory and logic elements and elements for communication with an external device which evaluates a physical property determined by the integrated circuit and characteristic of the circuit, characterized by the following steps:
- providing the integrated circuit (5) with at least one area (13) with a luminescent material (6),
- exciting the luminescent material (6) to luminescence,
- detecting the electromagnetic radiation emitted during luminescence,
- deriving a statement on authenticity for the data carrier (1) on the basis of the detected electromagnetic radiation.

2. The method of claim 1, characterized in that the material is excited by an electromagnetic radiation produced outside the data carrier and supplied to the material or by an electric field produced by the integrated circuit.

3. The method of claim 1, characterized in that the luminescence of the material is evaluated for determining authenticity.

4. The method of claim 3, characterized in that the emission spectrum, in particular at a wavelength of about 600 nm, is evaluated for determining the authenticity of the data carrier.

5. The method of claim 4, characterized in that the relation of emission spectrum and excitation spectrum is evaluated for determining the authenticity of the data carrier.

6. The method of claim 4, characterized in that the difference of the emission spectra obtained with different excitation is evaluated for determining authenticity.

7. The method of claim 1, characterized in that the electromagnetic radiation emitted by the material is converted into a binary characteristic value which is stored in the memory of the integrated circuit.

8. The method of claim 7, characterized in that the binary characteristic value is derived from the spectral distribution of the emitted electromagnetic radiation and/or the spatial arrangement of the light-emitting zones.

9. The method of claim 8, characterized in that the binary characteristic value derived from the detected electromagnetic radiation is compared with the characteristic value read from the memory of the integrated circuit.

10. A system for testing the authenticity of a data carrier, comprising
- a data carrier (1) with at least one integrated circuit (5) having memory elements (9), logic elements (10) and communication elements (4),
- means (24) for testing authenticity which access at least partial areas of the memory means (9) via the communication elements (4) for reading and/or writing,
- means (22) for measuring a physical property of the integrated circuit (5),
characterized in that
- the integrated circuit (5) has at least one area (13) with a material (6) which is excitable to luminescence, the area (13) being disposed so that electromagnetic radiation emitted by the material (6) can pass to the measuring means (22),
- means (11, 21) for exciting the material (6) to luminescence, and
- means (22) for detecting the electromagnetic radiation emitted by the material (6) after luminescence excitation, and for determining a characteristic property thereof are provided.

11. The system of claim 10, characterized in that the means (21, 22 and 24) are components of a device (20).

12. The system of claim 11, characterized in that the excitation means (21) are a laser and the means (22) are a photodetector having a row or a matrix of photodiodes.

13. The system of claim 10, characterized in that the means (11) for exciting the material (6) are a component of the integrated circuit (5).

14. A data carrier (1) for use in the system of claim 10 and having at least one integrated circuit (5) with memory elements (9) and logic elements (10) and elements (4) for communication with an external device (20), characterized in that the integrated circuit (5) is provided with at least one area (13) formed from a material (6) which is excitable to luminescence, said area being disposed so that electromagnetic radiation emitted by the material (6) during luminescence is detectable by measuring means (22).

15. The data carrier of claim 14, characterized in that a window (3) is provided within the module (2) in the area (13) with the material (6).

16. The data carrier of claim 15, characterized in that the material (6), the integrated circuit (5) are surrounded by a transparent casting compound (8) which also fills the window (3).

17. The data carrier of claim 14, characterized in that the area (13) includes light-emitting zones (12) and non-light-emitting zones (14) whose arrangement is characteristic of the data carrier.

18. The data carrier of claim 17, characterized in that the arrangement of the zones (12) and (14) within the area (13) is a class feature or an individual feature for the integrated circuit (5) of the data carrier.

19. The data carrier of claim 14, characterized in that the material (6) has luminescent properties.

20. The data carrier of claim 19, characterized in that the material (6) is a light-emitting semiconductor, in particular porous silicon, or a light-emitting polymer.

## Revendications

1. Procédé permettant de vérifier l'authenticité d'un support de données, comprenant au moins un circuit intégré avec des organes de mémoire et des organes logiques ainsi que des organes pour communiquer avec un appareil externe, destiné à évaluer une propriété physique caractérisant le circuit et qui est déterminée par le circuit intégré, caractérisé par les étapes suivantes consistant :
- à munir le circuit intégré (5) d'au moins une zone (13) présentant un matériau luminescent (6),
- à stimuler le matériau luminescent (6) jusqu'à la luminescence,
- à capturer le rayonnement électromagnétique engendré par la luminescence,
- à dériver une conclusion quant à l'authenticité concernant le support de données (1) sur la base du rayonnement électromagnétique capturé.

2. Procédé selon la revendication 1, caractérisé en ce que la stimulation du matériau est obtenue par un rayonnement électromagnétique qui est généré à l'extérieur du support de données et qui est amené jusqu'au matériau ou est obtenu par un champ électrique généré par le circuit intégré.

3. Procédé selon la revendication 1, caractérisé en ce que la luminescence du matériau est évaluée pour la détermination de l'authenticité.

4. Procédé selon la revendication 3, caractérisé en ce que le spectre d'émission, en particulier pour une longueur d'onde d'environ 600 nm, est évalué pour la détermination de l'authenticité du support de données.

5. Procédé selon la revendication 4, caractérisé en ce que le rapport entre le spectre d'émission et le spectre de stimulation est évalué pour la détermination de l'authenticité du support de données.

6. Procédé selon la revendication 4, caractérisé en ce que la différence des spectres d'émission obtenus pour différentes stimulations est évaluée pour la détermination de l'authenticité.

7. Procédé selon la revendication 1, caractérisé en ce que le rayonnement électromagnétique émis par le matériau est converti sous forme d'une valeur binaire de données caractéristiques qui est stockée dans la mémoire du circuit intégré.

8. Procédé selon la revendication 7, caractérisé en ce que la valeur binaires des données caractéristiques est dérivée à partir de la distribution spectrale du rayonnement électromagnétique émis et/ou de l'agencement spatial des zones émettant de la lumière.

9. Procédé selon la revendication 8, caractérisé en ce que la valeur binaire des données caractéristiques dérivée à partir du rayonnement électromagnétique capturé est comparée avec une valeur de données caractéristiques lue dans la mémoire du circuit intégré.

10. Système pour la vérification de l'authenticité d'un support de données, comprenant :
- un support de données (1) avec au moins un circuit intégré (5), présentant des organes de mémoire (9), des organes logiques (10) et des organes de communication (4),
- un dispositif (24) pour la vérification de l'authenticité, ayant accès, via les organes de communication (4), à au moins une zone partielle du dispositif de stockage (9) pour la lecture et/ou l'écriture,
- un dispositif (22) de mesure d'une propriété physique du circuit intégré (5),
caractérisé en ce que
- le circuit intégré (5) présente au moins une zone (13) avec un matériau (6) susceptible d'être stimulé par de la luminescence, dans lequel la zone (13) est agencée de sorte que le rayonnement électromagnétique émis par le matériau (6) puisse pénétrer jusqu'au dispositif de mesure (22),
- un dispositif (11, 21) pour la stimulation jusqu'à la luminescence du matériau (6), et
- en ce qu'il est prévu un dispositif (22) pour la capture du rayonnement électromagnétique émis après une stimulation jusqu'à la luminescence du matériau (6), ainsi que pour la détermination d'une propriété caractéristique du rayonnement.

11. Système selon la revendication 10, caractérisé en ce que les dispositifs (21, 22 et 24) sont des composants d'un appareil (20).

12. Système selon la revendication 11, caractérisé en ce que le dispositif (21) de stimulation est un laser et le dispositif (22) est une photodétecteur qui présente une ligne, ou respectivement une matrice de photodiodes.

13. Système selon la revendication 10, caractérisé en ce que le dispositif (11) pour la stimulation du matériau (6) est un composant du circuit intégré (5).

14. Support de données (1) destiné à être utilisé dans un système selon la revendication 10 qui présente au moins un circuit intégré (5) avec des organes de mémoire (9) et des organes logiques (10) ainsi que des éléments (4) pour la communication avec un appareil externe (20),
caractérisé en ce que le circuit intégré (5) est muni d'au moins une zone (13) formée à partir d'un matériau (6) susceptible d'être stimulé par de la luminescence, et est agencée de sorte que le rayonnement électromagnétique engendré par le matériau (6) soumis à la luminescence soit susceptible d'être capté par un appareil de mesure (22).

15. Support de données selon la revendication 14, caractérisé en ce qu'une fenêtre (3) est prévue dans la zone (13) avec le matériau (6) à l'intérieur du module (2).

16. Support de données selon la revendication 15, caractérisé en ce que le matériau (6) et le circuit intégré (5) sont entourés d'une masse moulée transparente (8) remplissant également la fenêtre (3).

17. Support de données selon la revendication 14, caractérisé en ce que la zone (13) englobe des zones émettant de la lumière (12) ainsi que des zones n'émettant pas de lumière (14), et dont l'agencement est caractérisant pour le support de données.

18. Support de données selon la revendication 17, caractérisé en ce que l'agencement des zones (12 et 14) à l'intérieur de la zone (13) représente une caractéristique de classe ou une caractéristique individuelle pour le circuit intégré (5) du support de données.

19. Support de données selon la revendication 14, caractérisé en ce que le matériau (6) présente des propriétés de luminescence.

20. Support de données selon la revendication 19, caractérisé en ce que le matériau (6) est un semi-conducteur émettant de la lumière, en particulier du silicium poreux ou un polymère émettant de la lumière.
